# EUROPÄISCHE PATENTANMELDUNG

(11) **EP 1 314 580 A1**
(43) Veröffentlichungstag der Anmeldung: **28.05.2003**
(21) Anmeldenummer: 02020119.0
(22) Anmeldetag: 07.09.2002
(51) Int. Cl.: B60C 11/24

(54) **Verfahren zur Ermittlung der Profiltiefe eines Reifens und Reifen**

(30) Priorität: 22.11.2001 DE 10157263
(71) Anmelder: Continental Aktiengesellschaft, 30165 Hannover (DE)
(72) Erfinder: Veit, Ivar, Dr., 64569 Nauheim (DE)

(57) **Zusammenfassung**

Die Erfindung betrifft ein Verfahren zur Ermittlung der Profiltiefe bzw. des Laufstreifenabriebes eines Reifens, insbesondere eines Fahrzeugluftreifens, während des Betriebes des Fahrzeuges.

Im Laufstreifen (1) sind in unterschiedlichen Positionen magnetisch leitfähige, insbesondere ferromagnetische, Elemente (6) untergebracht, die in zumindest einem oberhalb des Laufstreifens positionierten Sensor (7) auf elektromagnetische oder elektrodynamische Weise elektrische Signale erzeugen, die einer elektronischen Auswerteeinheit zugeführt werden, welche in Abhängigkeit von der Art der Signale den aktuellen Abriebszustand des Laufstreifens ermittelt und diesen, zumindest beim Erreichen eines Schwellwertes, welcher insbesondere dem höchstzulässigen Abrieb entspricht, zur Anzeige bringt.

## Beschreibung

Die Erfindung betrifft ein Verfahren zur Ermittlung der Profiltiefe bzw. des Laufstreifenabriebes eines Reifens, insbesondere eines Fahrzeugluftreifens, während des Betriebes des Fahrzeuges. Die Erfindung betrifft ferner einen zur Durchführung des Verfahrens besonders geeigneten Reifen.

Verfahren zur Ermittlung der Profiltiefe und damit des Laufstreifenabriebes eines Reifens im Betriebszustand, d.h. während des Abrollens des Reifens und des Betriebes des Fahrzeuges, sind grundsätzlich bekannt und sollen rechtzeitig vor dem Unterschreiten einer für die Profiltiefe kritischen Untergrenze eine entsprechende Warnung des Fahrers bewirken.

So befasst sich beispielsweise die DE-C-596 861 mit einer Anzeigevorrichtung für den Verschleiß bei Gummireifen, bei der in der Lauffläche in einer bezüglich des Abriebes noch zulässigen Tiefe federnde Elemente angeordnet sind, die vorerst von dem oberhalb befindlichen Gummi in einer gespannten Lage gehalten werden, doch nach dem Abrieb der sie abdeckenden Gummischicht frei werden, nach außen schnellen und auf elektrischem Wege Alarmsignale auslösen. Eine Realisierung dieser Idee dürfte an der schwierigen Herstellung scheitern, insbesondere sind gespannte Federelemente im rohen Gummimaterial von Laufstreifen kaum unterzubringen.

Die DE-A-2 314 915 offenbart einen Fahrzeugreifen, in dessen Lauffläche eine oder mehrere anders gefärbte oder anders strukturierte Schichten eingearbeitet sind, die sich somit von dem sonstigen Laufstreifenmaterial unterscheiden und nach einem entsprechenden Laufstreifenabrieb sichtbar werden. Abgesehen davon, dass die Sichtbarkeit dieser Schichten durch Verschmutzungen oder Ähnliches stark beeinträchtigt sein kann, erfordert diese Idee vom Benützer des Fahrzeuges das Durchführen einer entsprechenden Sichtkontrolle der Reifen in regelmäßigen Abständen.

Der Erfindung liegt die Aufgabe zu Grund, eine ständige Kontrolle der Laufstreifenabnutzung auf verlässliche Weise zu ermöglichen, ohne den Reifen einer Sichtkontrolle unterziehen zu müssen.

Gelöst wird diese Aufgabe erfindungsgemäß dadurch, dass im Laufstreifen in unterschiedlichen Positionen untergebrachte, magnetisch leitfähige, insbesondere ferromagnetische, Elemente in zumindest einem oberhalb des Laufstreifens positionierten Sensor auf elektromagnetische oder elektrodynamische Weise elektrische Signale erzeugen, die einer elektronischen Auswerteeinheit zugeführt werden, welche in Abhängigkeit von der Art der Signale den aktuellen Abriebszustand des Laufstreifens ermittelt und diesen, zumindest beim Erreichen eines Schwellwertes, welcher insbesondere dem höchstzulässigen Abrieb entspricht, zur Anzeige bringt.

Die Erfindung gestattet daher einen ständige Kontrolle der Profilabnutzung eines Reifens, die vom Fahrzeuginneren ohne Sichtkontrolle der Reifen durchgeführt werden kann. Dabei kann dem Fahrer sowohl der aktuelle Zustand des Abriebszustandes zur Verfügung gestellt werden, als auch nur dann ein Warnsignal erzeugt werden, wenn ein kritischer Schwellwert bevorsteht oder erreicht ist.

Zusätzlich gestattet es die Erfindung, in Abhängigkeit vom festgestellten Abriebszustand des Reifens, auf andere fahrzeugbezogene Parameter Einfluss zu nehmen. In Abhängigkeit von der Abnutzung kann die Bremskraft eingestellt werden, es kann die Fahrdynamik des Fahrzeuges, etwa über Luftfedern, optimiert werden und es kann in Abhängigkeit von der Profiltiefe ein Warnsignal bei der Gefahr von Aquaplaning erzeugt werden.

Der zur Durchführung des erfindungsgemäßen Verfahrens besonders geeignete Reifen ist derart ausgeführt, dass sich die im Laufstreifen eingebetteten und magnetisch leitfähigen Elemente zumindest an einer örtlich begrenzten Messstelle befinden. Diese Maßnahme hat den Vorteil einer leichteren und zuverlässigen Auswertung der von der Sensorik erfassten Signale in der Auswerteeinrichtung.

Dabei werden erfindungsgemäß die magnetisch leitfähigen Element in diesen Messstellen, beispielsweise in Profilblöcken, in unterschiedlichen Tiefenpositionen eingebettet und entweder in axialer Richtung oder in Umfangsrichtung gegeneinander versetzt. Derartige Anordnungen der magnetisch leitfähigen Elemente im Laufstreifen ermöglichen eine besonders gute Erfassung des Abriebszustandes durch eine Erzeugung von Signalfolgen und Signalstrukturen in der Sensorik, die dem jeweiligen Abriebszustand eindeutig zugeordnet werden können.

Für die Zuverlässigkeit und Eindeutigkeit der Messung des Abriebszustandes ist es außerdem von Vorteil, wenn innerhalb eines in Umfangsrichtung umlaufenden Laufstreifenbereiches, beispielsweise einer Blockreihe oder eines Laufstreifenbandes, zumindest zwei Messstellen vorgesehen sind.

Der Laufstreifenabrieb ist oft in seitlichen Laufstreifenbereichen abweichend von jenem im Laufstreifenmittelbereich. Für eine diesbezügliche Ermittlung des Abriebszustandes ist es günstig, wenn in mehreren der in Umfangsrichtung umlaufenden Laufstreifenbereichen Messstellen mit magnetisch leitfähigen Elementen vorgesehen werden.

Weitere Merkmale, Vorteile und Einzelheiten der Erfindung werden anhand der Zeichnung, die schematisch Ausführungsbeispiele der Erfindung darstellt, näher beschrieben. Dabei zeigen
Fig. 1 eine Ausführungsform der Erfindung anhand eines Querschnittes durch einen Fahrzeugluftreifen im Bereich des Laufstreifens,
Fig. 2 das Detail A aus Fig. 1 in vergrößerter Darstellung und
Fig. 3 eine weiteren Ausführungsform der Erfindung anhand einer weiteren Detaildarstellung eines Schnittes parallel zur Umfangsrichtung des Reifens im Bereich des Laufstreifens.

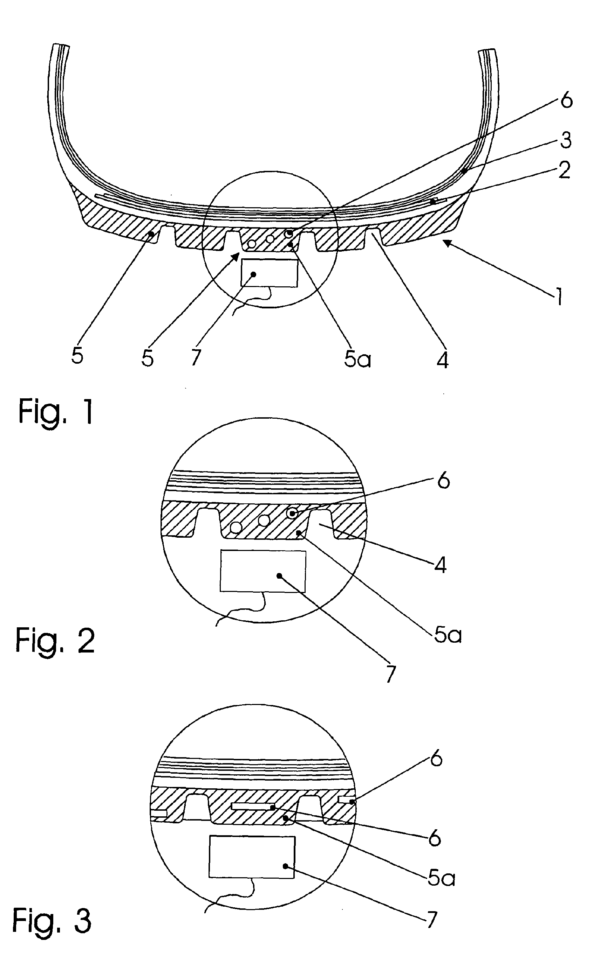

In Fig. 1 ist als Fahrzeugluftreifen beispielhaft ein PKW-Radialreifen dargestellt, welcher einen Laufstreifen 1, einen Gürtel 2 und eine Radialkarkasse 3 aufweist. Die dargestellten Gürtellagen und die Karkasslagen können in bekannter Weise angeordnete und in Gummi eingebettete Festigkeitsträger aufweisen. Die nicht dargestellten Bereiche der Seitenwände und die Wulstbereiche können ebenfalls in herkömmlicher Weise ausgeführt sein.

Der Laufstreifen 1 ist mit einer Profilierung versehen, die nicht Gegenstand dieser Erfindung ist und auf beliebige Weise ausgeführt sein kann. Wie gezeigt, kann die Laufstreifenprofilierung mehrere Umfangsnuten 4 aufweisen, die entweder rippenartig umlaufende Laufstreifenbereiche oder in einzelne Blöcke gegliederte Blockreihen voneinander trennen, die mit dem Untergrund beim Abrollen des Reifens in Kontakt treten. Bei den dargestellten Ausführungsformen wird beispielhaft davon ausgegangen, dass Blockreihen 5 vorgesehen sind.

Bei der in Fig. 1 und 2 gezeigten Ausführungsform der Erfindung sind in mindestens einem Block 5a der entlang des Reifenäquators umlaufenden Profilblockreihe 5 Elemente 6 aus magnetisch leitfähigem Material eingebettet. Fig. 1 und 2 zeigen einen Schnitt durch die im Block 5a enthaltenen Elemente 6. Die eingebetteten Elemente 6 sind hier in der Form von kleinen Kugeln ausgeführt, können aber auch Würfel, Streifen oder dergleichen sein. Die Elemente 6 befinden sich abgestuft in unterschiedlichen Tiefenpositionen und sind in axialer Richtung gegeneinander versetzt. In jeder Tiefenposition können auch mehrere Elemente 6 vorgesehen sein und es ist ferner möglich, die Elemente 6 in mehr als drei unterschiedlichen Tiefen vorzusehen. Bevorzugt ist ferner eine Ausführungsform, bei der in mindestens zwei Blöcken 5a der Blockreihe 5, insbesondere an zumindest zwei diametral gegenüber liegenden Positionen, die Elemente 6 eingebettet sind.

Mittels der abgestuft in unterschiedlichen Tiefen untergebrachten und zusätzlich axial versetzten magnetisch leitfähigen Elemente 6 lässt sich eine berührungslose Messung des Laufstreifenabriebes durchführen, indem in einem Abstand von und gegenüber dem betreffenden Laufstreifenband bzw. der betreffenden Blockreihe zumindest ein Sensor 7 positioniert wird, welcher auf elektromagnetische oder elektrodynamische Weise das Vorhandensein der eingebetteten Elemente 6 erfasst. Der in Fig. 1 und 2 schematisch eingezeichnete Sensor 7 kann beispielsweise auf einem Sensorträger, welcher an der Radkasteninnenseite befestigt ist oder mit einem anderen Fahrzeugteil verbunden ist, angeordnet sein. Die im Betrieb des Fahrzeuges, beim Abrollen des Reifens, am Sensor 7 vorbeibewegten Elemente 6 induzieren Spannungssignale, die von der Anzahl der im Block 5a bzw. den Blöcken 5a enthaltenen Elementen 6 abhängen. Die im Sensor 7 erzeugten Signale werden an eine im Fahrzeug untergebrachte elektronische Auswerteeinheit übertragen und entsprechend ausgewertet. Bei neuem, noch nicht abgenutztem Laufstreifen tragen sämtliche der eingebetteten Elemente 6 zur Erzeugung der Signale im Sensor 7 bei. Mit fortschreitendem Abrieb des Laufstreifens geht vorerst das am weitesten außen befindliche Element 6 verloren. Damit verändern sich auch die induzierten Signale. Dies ist auch dann der Fall, wenn das zweite eingebettete Element 6 in Folge Laufstreifenabrieb nicht mehr vorhanden ist. Geht schließlich auch noch das dritte eingebettete Element 6 verloren, so kann kein Signal mehr vom Sensor 7 auf die Auswerteeinheit übertragen werden. Der Laufstreifen ist dann beispielsweise so weit abgefahren, dass die gesetzliche Mindestprofiltiefe erreicht oder nahezu erreicht ist. Somit ist schließlich jene Situation erreicht, die der höchstzulässigen Abnutzung des Laufstreifens entspricht.

Bei der in Fig. 3 gezeigten Ausführungsvariante der Erfindung ist vorgesehen, dass die in unterschiedlichen Tiefenpositionen eingebetteten Elemente 6 plättchenförmig ausgeführt sind und in verschiedenen, in Umfangsrichtung aufeinander folgenden Blöcken 5a eingebettet sind. In einem der gezeigten Blöcke 5a befindet sich das der Laufstreifenoberfläche am nächsten befindliche Element 6, in dem an diesen Profilblock 5a anschließenden Profilblock 5a jenes, welches etwas weiter innen, etwa in der Mitte des Profilblockes 5a, eingebettet ist und schließlich ist in dem folgenden Profilblock 5a jenes Element 6 enthalten, welches am weitesten innen liegt. Auch bei dieser Ausführungsform erfolgt die Ermittlung des Abriebszustandes des Laufstreifens über zumindest einen in einem Abstand von der Laufstreifenoberfläche positionierten Sensor 7. Die Funktionsweise dieser Ausführungsvariante entspricht im Wesentlichen jener der bereits beschriebenen Variante, wobei hier im Sensor 7 in zeitlicher Aufeinanderfolge eine Signalfolge induziert wird, die sich mit fortschreitendem Laufstreifenabrieb ändert, da schließlich nur mehr von zwei Elementen 6 und dann von einem Element 6 Signale erzeugt werden und mit dem Erreichen der höchstzulässigen Abnutzung kein Signal mehr induziert wird. Auch bei dieser Ausführungsvariante ist es empfehlenswert, an zumindest zwei Stellen am Umfang des Reifens in mindestens drei aufeinander folgenden Blöcken 5a in unterschiedlichen Tiefenpositionen magnetisch leitfähige Elemente 6 vorzusehen.

Als Materialien für die Elemente 6 kommen vor allem ferromagnetische Stoffe in Frage, beispielsweise können die Elemente 6 Eisenkügelchen sein.

Es können auch in weiteren Blockreihen oder Laufstreifenbändern Elemente 6 untergebracht sein, um den Laufstreifenabrieb auch in den seitlich gelegenen Laufstreifenbereichen zu ermitteln. Dabei ist es empfehlenswert, innerhalb eines in Umfangsrichtung umlaufenden Laufstreifenbereiches drei bis vier Messstellen einzubringen. Die Elemente 6 können in den Laufstreifen des fertigen Reifens auf einfache Weise ähnlich wie Spikes eingebracht werden. Die Auswerteeinheit kann die verarbeiteten Signale mit zumindest einem Schwellwert vergleichen, um rechtzeitig eine Anzeige bzw. ein Warnsignal zu betätigen. Die Sensorik ist auf die Anordnung der Elemente 6 im Laufstreifen entsprechend abzustimmen. Jeder am Fahrzeug befindliche Reifen ist ferner bezüglich seines Laufstreifenabriebes gesondert zu überwachen, das heißt, dass für jeden Reifen die Auswertung der Signale gesondert zu erfolgen hat.

## Patentansprüche

1. Verfahren zur Ermittlung der Profiltiefe bzw. des Laufstreifenabriebes eines Reifens, insbesondere eines Fahrzeugluftreifens, während des Betriebes des Fahrzeuges,
**dadurch gekennzeichnet,**
**dass** im Laufstreifen (1) in unterschiedlichen Positionen untergebrachte, magnetisch leitfähige, insbesondere ferromagnetische, Elemente (6) in zumindest einem oberhalb des Laufstreifens positionierten Sensor (7) auf elektromagnetische oder elektrodynamische Weise elektrische Signale erzeugen, die einer elektronischen Auswerteeinheit zugeführt werden, welche in Abhängigkeit von der Art der Signale den aktuellen Abriebszustand des Laufstreifens ermittelt und diesen, zumindest beim Erreichen eines Schwellwertes, welcher insbesondere dem höchstzulässigen Abrieb entspricht, zur Anzeige bringt.

2. Reifen zur Durchführung des Verfahrens gemäß Anspruch 1, **dadurch gekennzeichnet, dass** die im Laufstreifen eingebetteten magnetisch leitfähigen Elemente (6) zumindest eine örtlich begrenzte Messstelle bilden.

3. Reifen nach Anspruch 2, **dadurch gekennzeichnet, dass** an der Messstelle die magnetisch leitfähigen Elemente (6) in unterschiedlichen Tiefenpositionen eingebettet und in axialer Richtung oder in Umfangsrichtung gegeneinander versetzt sind.

4. Reifen nach Anspruch 2 oder 3, **dadurch gekennzeichnet, dass** an einer Messstelle zumindest drei magnetisch leitfähige Elemente (6) eingebettet sind.

5. Reifen nach einem der Ansprüche 2 bis 4, **dadurch gekennzeichnet, dass** innerhalb eines in Umfangsrichtung umlaufenden Laufstreifenbereiches, beispielsweise einer Bockreihe oder eines Laufstreifensbandes, zumindest zwei Messstellen vorgesehen sind.

6. Reifen nach einer der Ansprüche 2 bis 5, **dadurch gekennzeichnet, dass** in mehreren der in Umfangsrichtung umlaufenden Laufstreifenbereichen Messstellen mit magnetisch leitfähigen Elementen (6) vorgesehen sind.

7. Reifen nach einem der Ansprüche 2 bis 6, **dadurch gekennzeichnet, dass** die magnetisch leitfähigen Elemente (6) Kugeln, Plättchen oder dergleichen sind.
